# EUROPEAN PATENT SPECIFICATION

(11) **EP 0 718 359 B1**
(45) Date of publication and mention of the grant of the patent: **30.01.2002**
(21) Application number: 95309208.7
(22) Date of filing: 20.12.1995
(51) Int. Cl.: C08L 9/06, C08L 25/10, B60C 1/00

(54) **Rubber composition for tyre treads**
Gummimischung für Reifenlaufflächen
Composition de caoutchouc pour bandes de roulement de pneus

(30) Priority: 20.12.1994 JP 31697694
(43) Date of publication of application: 26.06.1996
(73) Proprietor: SUMITOMO RUBBER INDUSTRIES LIMITED, Kobe-shi, Hyogo-ken (JP)
(72) Inventor: Kadomaru, Kazuo, Kobe-shi, Hyogo-ken (JP); Nakada, Yoko, Kobe-shi, Hyogo-ken (JP)
(74) Representative: Stewart, Charles Geoffrey

(56) References cited:
- EP-A- 0 682 071
- WO-A-94/26817
- US-A- 5 063 268
- US-A- 5 162 409

## Description

The present invention relates to a rubber composition suitable for use in tyre treads, and more particularly to a rubber composition for tyre treads having reduced rolling resistance and improved wet grip.

In recent years, from the viewpoint of accommodating social demands to save resources and energy, development of so-called low fuel cost tyres has been pursued extensively in order to save fuel costs of automobiles. The lower the rolling resistance of tyres is made, the more the fuel consumption of automobiles is decreased, thus providing low fuel cost tyres. Accordingly, it is necessary to use, as a tread rubber, rubber compositions having a low rolling resistance, namely a low hysteresis loss.

On the other hand, tread rubbers having a large frictional resistance on wet roads are desirable from the viewpoint of safety in running.

Accordingly, the frictional resistance on wet roads must be increased for raising the wet grip force, while rolling resistance must be decreased for achieving a low fuel cost. Thus, both the rolling property and the wet grip property are in a contradictory relationship to each other. Various compositions for tyre treads have hitherto been proposed in order to satisfy both properties simultaneously.

For instance, proposals have been made in view of the fact that rubber polymers and carbon black greatly affect these properties. In the case of using a styrene-butadiene copolymer as a rubber polymer, it has been proposed to improve both the rolling property and the wet grip property by suitably selecting the content of bound styrene and the content of 1,2-bonds in the butadiene portion. With respect to carbon black, from the viewpoint: that the cut chipping resistance of treads deteriorates if the particle size is large or the amount is small, carbon black of a new type having an improved degree of surface activity of carbon black particle, e.g. carbon black N351, has been developed. An effect has been achieved thereby to some extent.

Other proposals include US-A-5 063 268 where it is intended to improve wet traction by means of a tread composition containing 3-30% by weight of a halogen-containing copolymer of C4-C7 isomono-olefin and a para-alkylstyrene, preferably a halogenated copolymer of isobutylene and p-methylstyrene, 25-50% by weight of a diene rubber and 20-50% by weight of carbon black.

US-A-5 162 409 has the object of providing a tread rubber composition having good anti-skid properties in all conditions and decreased rolling resistance without abnormal tread wear which it suggests can be achieved by using a tread rubber of halogenated isobutylene rubber such as bromobutyl rubber or isobutylene/bromomethylstyrene copolymer, a diene rubber, silica and carbon black.

WO-A-9426817 and EP-A-0682071 (Application published after the filing date of the present Application and which falls under Article 54(3) EPC) propose other solutions utilising an elastomer blend containing an amine-functionalised elastomer and a tread rubber composition which is a combination of at least three different elastomers respectively.

Tyres having improved rolling resistance to meet the demands of energy saving without deterioration in wet grip property are further desired.

Accordingly the invention provides a rubber composition for a tyre tread, characterised by comprising a rubber component consisting of a styrene-butadiene rubber having a tan δ max temperature of not more than -25°C and 5 to 25 parts of a halogenated copolymer of isobutylene and p-methylstyrene having a p-methylstyrene content between not less than 2% by weight and not more than 20% by weight and a degree of halogenation of 1 to 10% by weight, and 30 to 90 parts of carbon black, said parts all being parts by weight per 100 parts by weight of said rubber component, the tan δ max temperature of the cured product of said rubber composition being not more than -15°C, values of tan δ max temperature being determined from a curve of change in tan δ with respect of temperature measured using a sample press-cured at 170°C for 12 minutes and a viscoelasticity spectrometer under conditions of frequency 10Hz, initial strain 10%, amplitude 0.5% and rate of temperature elevation of 2°C/minute.

This is based on the fact that the rolling resistance and friction coefficient of tyres on wet roads both have a relationship to the viscoelasticity of rubber compositions. In details, rolling resistance is related to the loss coefficient at a temperature in the vicinity of 50°C, and wet grip force is related to the loss coefficient at a temperature in the vicinity of 0°C.

It has been found that the temperature dependency of the loss coefficient of a rubber composition can be changed by adding a specific polymer to the composition, whereby rolling property and the wet grip property of the tyre can both be improved.

Since a rubber having a specific structure, namely a halogenated copolymer of isobutylene and p-methylstyrene, the peak of loss coefficient of which is broad and extends up to a relatively high temperature region, is incorporated in the rubber composition with a styrene-butadiene rubber, the loss coefficient is large in the vicinity of 0°C and is small in the vicinity of 50°C as compared with rubber compositions containing conventionally used styrene-butadiene rubber alone as a rubber component. Thus, the rolling characteristics and the wet grip characteristics which are contrary to each other, can be improved to reduce the rolling resistance and to increase the friction resistance on wet roads. The tread rubber composition of the present invention thus provides low fuel cost tyres having excellent wet grip characteristics.

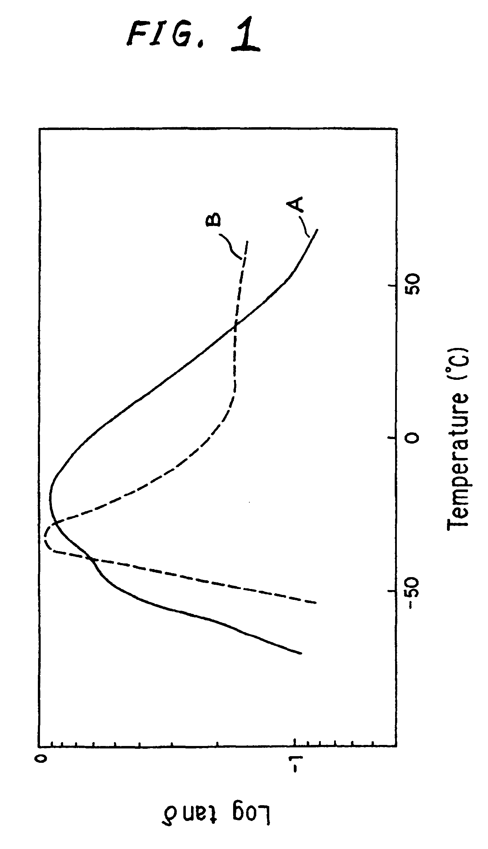

The accompanying drawing shown in Figure 1 is a graph showing isochronal temperature sweeps of the loss coefficients of a halogenated copolymer of isobutylene and p-methylstyrene and an emulsion-polymerised SBR where in the solid line A shows the temperature dependency for the halogenated copolymer and the broken line B shows the temperature dependency for SBR.

A solution-polymerised SBR and an emulsion-polymerised SBR are preferably used in the present invention, since the solution-polymerised SBR gives a rubber having a high impact resilience and a low energy loss and makes it easy to prepare rubber compositions in compliance with purposes and since the emulsion-polymerised SBR is superior in low cost, processability and strength.

From a connection with a halogenated copolymer of isobutylene and p-methylstyrene, it is necessary to select a styrene-butadiene rubber, the peak temperature of the loss coefficient (tan δ max temperature) of which is not more than -25°C.

The term "peak temperature" as herein used means a temperature corresponding to the top of a peak (tan δ max).

The styrene-butadiene rubber is used in combination with a halogenated copolymer of isobutylene and paramethylstyrene (hereinafter referred also to as "methylstyrene copolymer rubber") as a rubber component of the composition according to the present invention. The content of p-methylstyrene in the copolymer is not more than 20% by weight, preferably not more than 10% by weight, and is not: less than 2% by weight. If the p-methylstyrene content is more than 20% by weight, the viscosity of the copolymer is raised, thus resulting in decrease of the processability. This copolymer is obtained by halogenating an isobutylene/p-methylstyrene copolymer, whereby the p-methylstyrene portion is halogenated. Thus it contains the isobutylene units and the halogenated p-methylstyrene units shown by the following formulas: 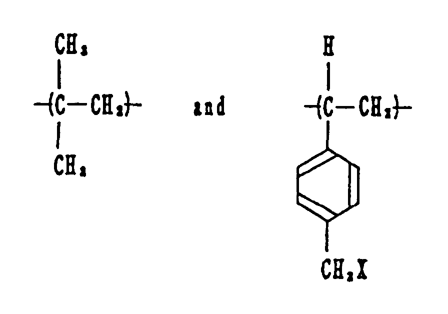 wherein X is a halogen atom such as chlorine or bromine.

The degree of halogenation (the content of a halogen) is from 1% to 10% by weight, preferably from 1% to 5% by weight, typically about 2% by weight.

As shown in the accompanying drawing of Figure 1 wherein the solid line A shows a temperature dependency of the loss coefficient of the methylstyrene copolymer rubber and the broken line B shows a temperature dependency of the loss coefficient of an emulsion-polymerised SBR ("SBR 1500" made by Sumitomo Chemical Company Limited) which is a representative styrene-butadiene rubber, the peak of the loss coefficient of the methylstyrene copolymer rubber is broad as compared with the emulsion-polymerised SBR and extends up to a relatively high temperature side. Moreover, the loss coefficient thereof is lower than that of the SBR at the higher temperature side. The rubber compositions used in the measurement of loss coefficient are shown in the following Table 1.

**TABLE 1**

| Composition | Solid line A of Fig. 1 | Broken line B of Fig. 1 |
|---|---|---|
| Methylstyrene copolymer rubber* | 100 | - |
| Emulsion-polymerised SBR | - | 100 |
| Carbon black N339 | 40 | 40 |
| Wax | 2 | 2 |
| Antioxidant | 2 | 2 |
| Stearic acid | 2 | 2 |
| Zinc oxide | 2 | 2 |
| Sulfur | - | 1.5 |
| Curing accelerator | - | 0.75 |

| | | |
|---|---|---|
| (Note) *Halogenated copolymer of isobutylene and p-methylstyrene commercially available under the trade mark "EXXPRO" 90-10 made by Exxon Corp. | | |

Since the methylstyrene copolymer rubber has such loss coefficient characteristics, the temperature dependency of the loss coefficient of a rubber composition can be changed so as to raise the loss coefficient at a temperature in the vicinity of 0°C and to lower the loss coefficient at a temperature in the vicinity of 50°C by using a styrene-butadiene rubber which has the loss coefficient peak on a low temperature side, in combination with the methylstyrene copolymer rubber. Thus, it is possible to satisfy both the rolling characteristics and the wet grip characteristics which are contrary to each other. Since these effects are based on utilisation of a difference in the temperature dependency of loss coefficient between the styrene-butadiene rubber and the methylstyrene copolymer rubber, it is necessary, as mentioned above, that the loss coefficient peak temperature (tan δ max temperature) of the styrene-butadiene rubber is not higher than -25°C.

The methylstyrene copolymer rubber is used in an amount of 5 to 25 parts by weight, preferably 5 to 20 parts by weight, per 100 parts by weight of the rubber component, namely per 100 parts by weight of all rubbers used. If the amount of the methylstyrene copolymer rubber is less than 5 parts by weight, effects of improvement in the rolling resistance and the friction resistance on wet roads are not observed. If the amount of the methylstyrene copolymer is more than 25 parts by weight, lowering of the abrasion resistance becomes marked and also the processability is deteriorated.

It is necessary to incorporate 30 to 90 parts by weight of carbon black per 100 parts by weight of the rubber component into the rubber composition according to the present invention. If the amount: of carbon black is less than 30 parts by weight, the abrasion resistance is deteriorated. If the amount: is more than 90 parts by weight, improvement effects on rolling and wet grip characteristics are reduced. The kind of carbon black is not particularly limited.

The rubber composition of the present invention can contain various additives for rubbers as generally used, e.g. a curing agent such as sulfur, a curing accelerator, an activator such as zinc oxide or stearic acid, a process oil, an antioxidant, a filler and other additives.

The rubber composition of the present invention can be prepared and cured conventionally.

The cured product obtained by curing the rubber composition of the present invention has a tan δ max temperature of not more than -15°C, since improvement effects on rolling characteristics and wet grip characteristics are clearly observed.

The tan δ max temperature as herein used is determined from a curve of change in loss tangent (tan δ) with respect of temperature measured using a viscoelasticity spectrometer under conditions of frequency 10 Hz, initial strain 10%, amplitude 0.5% and rate of temperature elevation 2°C/minute.

The present invention is more specifically described and explained by means of the following Example and Comparative Examples in which all parts are by weight. It is to be understood that the present invention is not limited to the Example.

### Example 1 and Comparative Examples 1 to 6

Seven rubber compositions A-1 to D-2 were prepared according to the recipes shown in Table 2, wherein rubber compositions shown by the same alphabet number had the same composition of components other than the rubber component, by mixing the components other than sulfur, accelerator, antioxidant and zinc oxide at 150°±5°C to give a first stock and then mixing the first stock with sulfur, accelerator, antioxidant and zinc oxide at 110°±10°C to give a final stock.

Rubber compositions A-1, B-1 and C-1 containing no methylstyrene copolymer rubber, rubber composition D-1 and D-2 containing a large amount of carbon black, and rubber composition C-2 which contains a methylstyrene copolymer rubber, but whose cured product has a tan δ max temperature of more than -15°C, are for comparative example, whilst rubber composition A-2, is the example of the present invention.

The components shown in Table 2 are as follows:
Methylstyrene copolymer: Halogenated copolymer of isobutylene and p-methylstyrene commercially available under the trade mark "EXXPRO" 90-10 made by Exxon Corp.
Emulsion SBR (1): Emulsion-polymerised styrene-butadiene rubber having a bound styrene content of 23.5% by weight and a vinyl bond content of 18.0% by weight commercially available under the trade mark "SBR 1500" made by Sumitomo Chemical Company Limited.
Emulsion SBR (2): Oil extended emulsion-polymerised styrene-butadiene rubber having a bound styrene content of 35.0% by weight, a vinyl bond content of 18.0% by weight and an oil extender content of 37.5 parts per 100 parts of the rubber commercially available under the trade mark "SBR 9520" made by Nippon Zeon Co Limited.
Solution SBR: Solution-polymerised styrene-butadiene rubber having a bound styrene content of 21.0% by weight and a vinyl bond content of 63.0% by weight commercially available under the trade mark "NS 116" made by Nippon Zeon Co Limited.
Carbon black: N220 and N339 made by Showa Cabot Kabushiki Kaisha.
Antioxidant: N-Phenyl-N'-(1,3-dimethylbutyl)-p-phenylenediamine
Curing accelerator: N-Tert-butyl-2-benzothiazolylsulfenamide.

In Table 2, the amount of oil shows that of the oil added in order to adjust the hardness of a finally obtained rubber and except the amount of the oil extender included in the oil extended rubber.

The thus prepared rubber compositions were evaluated as follows:

The prepared rubber compositions were press-cured at 170°C for 12 minutes to give cured rubber specimens. Loss tangent (tan δ) dispersion curves of the specimens were measured by a viscoelasticity spectrometer made by Iwamoto Seisakusho Kabushiki Kaisha under conditions of frequency 10 Hz and amplitude 0.5%. From the obtained results, the tan δ peak temperature was measured. Also, the tan δ values at 0°C and 50°C were obtained, and the tan δ values of a composition containing the methylstyrene copolymer at 0°C and 50°C were represented as an index to the tan δ values of the corresponding composition containing no methylstyrene copolymer regarded as 100.

Also, abrasion resistance of the cured rubber specimens was measured using a Lambourn abrasion tester made by Iwamoto Seisakusho Kabushiki Kaisha under conditions of loading 2.5kg and slip percentages 20% and 40%. The average of the abrasion values under slipping conditions 20% and 40% was obtained, and the average value for a composition containing the methylstyrene copolymer was represented as an index to the average value for the corresponding composition containing no methylstyrene copolymer regarded as 100. The larger the abrasion index, the better is the abrasion resistance.

The results are shown in Table 2.

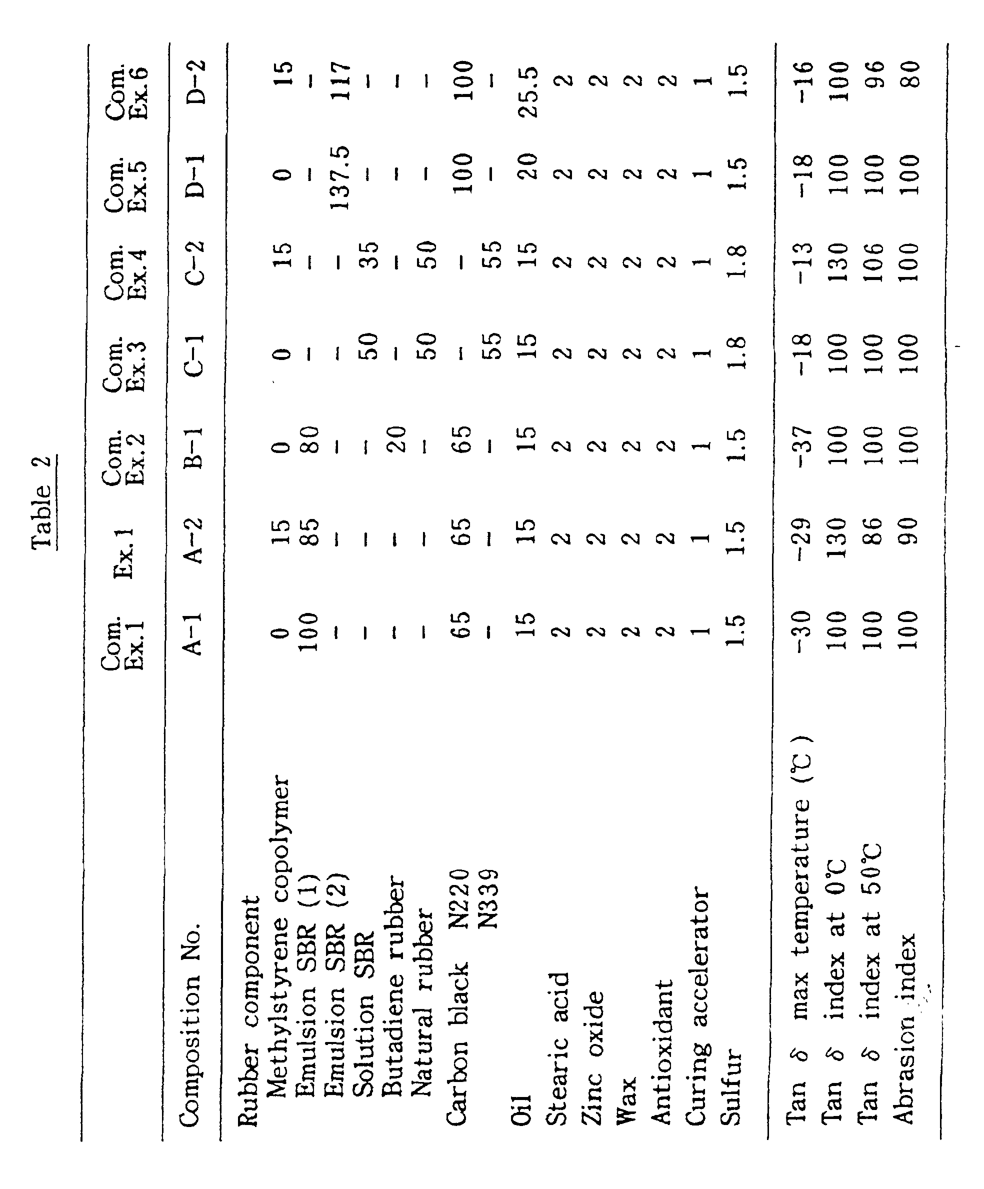

It can be seen in Table 2 that the rubber composition A containing the methylstyrene copolymer rubber has an increased tan δ index at 0°C and a decreased tan δ index at 50°C as compared with rubber compositions containing no methylstyrene copolymer rubber. It would be understood therefrom that both the rolling characteristics and the wet grip characteristics can be improved by the incorporation of the methylstyrene copolymer rubber. However, if the amount of carbon black incorporated is too large, the tan δ values do not change or sufficiently change both at 0°C and 50°C, particularly at 0°C, as apparent from the results of the compositions D, and accordingly desirable improvements in rolling and wet grip characteristics are hard to obtain.

Also, it can be seen from the results of Comparative Example 4 (rubber composition C-2) that even if a rubber composition is incorporated with the methylstyrene copolymer, the rolling characteristics are deteriorated if the tan δ max temperature of the composition is higher than -15°C, so the object of the present invention cannot be achieved.

The abrasion resistance of the compositions of Example 1 is still satisfactory.

In addition to the ingredients used in the Examples, other ingredients can be used in the Examples as set forth in the specification to obtain substantially the same results.

## Claims

1. A rubber composition for a tyre tread, **characterised by** comprising a rubber component consisting of a styrene-butadiene rubber having a tan δ max temperature of not more than -25°C and 5 to 25 parts of a halogenated copolymer of isobutylene and p-methylstyrene having a p-methylstyrene content between not less than 2% by weight and not more than 20% by weight and a degree of halogenation of 1 to 10% by weight, and 30 to 90 parts of carbon black, said parts all being parts by weight per 100 parts by weight of said rubber component, the tan δ max temperature of the cured product of said rubber composition being not more than -15°C, values of tan δ max temperature being determined from a curve of change in tan δ with respect of temperature measured using a sample press-cured at 170°C for 12 minutes and a viscoelasticity spectrometer under conditions of frequency 10Hz, initial strain 10%, amplitude 0.5% and rate of temperature elevation of 2°C/minute.

2. A rubber composition according to claim 1, **characterised in that** said styrene-butadiene rubber contains an emulsion-polymerised styrene-butadiene rubber.

3. A rubber composition according to claim 1, **characterised in that** said styrene-butadiene rubber contains a solution-polymerised styrene-butadiene rubber.

4. A rubber composition according to any of claims 1 to 3, **characterised in that** said rubber component contains 5 to 20% by weight of said halogenated copolymer of isobutylene and p-methylstyrene.

## Patentansprüche

1. Gummimischung für eine Reifenlauffläche, **dadurch gekennzeichnet daß** sie eine Gummikomponente, die aus einem Styrol-Butadienkautschuk mit einer tan δ max Temperatur von nicht mehr als -25°C und 5 bis 25 Teilen eines halogenierten Copolymeren von Isobutylen und p-Methylstyrol, das einen p-Methylstyrolgehalt zwischen nicht weniger als 2 Gew.-% und nicht mehr als 20 Gew.-% und einen Halogenierungsgrad von 1 bis 10 Gew.-% hat, besteht, und 30 bis 90 Teile Ruß umfaßt, wobei diese Teile alle Gewichtsteile pro 100 Gewichtsteile dieser Gummikomponente sind, die tan δ max Temperatur des vulkanisierten Produktes dieser Gummimischung nicht mehr als -15°C beträgt, wobei die Werte der tan δ max Temperatur aus einer Kurve der Veränderung von tan δ gegenüber der Temperatur bestimmt wurden, die unter Verwendung einer bei 170°C für 12 Minuten preßvulkanisierten Probe und eines Viscoelastizitäts-Spektrometers unter Bedingungen einer Frequenz von 10 Hz, einer Anfangsspannung von 10%, einer Amplitude von 0,5% und einer Temperatursteigerungsrate von 2°C/Minute gemessen wurde.

2. Gummimischung nach Anspruch 1, **dadurch gekennzeichnet, daß** dieser Styrol-Butadienkautschuk einen emulsionspolymerisierten Styrol-Butadienkautschuk enthält.

3. Gummimischung nach Anspruch 1, **dadurch gekennzeichnet, daß** dieser Styrol-Butadienkautschuk einen lösungspolymerisierten Styrol-Butadienkautschuk enthält.

4. Gummimischung nach einem der Ansprüche 1 bis 3, **dadurch gekennzeichnet, daß** diese Kautschukomponente 5 bis 20 Gew.-% dieses halogenierten Copolymeren von Isobutylen und p-Methylstyrol enthält.

## Revendications

1. Composition de caoutchouc pour une bande de roulement, **caractérisée en ce qu'**elle comprend un constituant de caoutchouc constitué d'un caoutchouc de styrène-butadiène ayant une température max tan δ d'au plus -25°C et de 5 à 25 parties d'un copolymère halogéné d'isobutylène et de p-méthylstyrène ayant une teneur en p-méthylstyrène comprise entre 2 % en poids et 20 % en poids et un degré d'halogénation de 1 à 10 % en poids, et de 30 à 90 parties de noir de carbone, lesdites parties étant toutes des parties en poids pour 100 parties en poids dudit constituant de caoutchouc, la température max tan δ du produit vulcanisé de ladite composition de caoutchouc étant d'au plus -15°C, les valeurs de la température max tan δ étant déterminées à partir d'une courbe de modification de tan δ en fonction de la température mesurée en utilisant un échantillon vulcanisé par compression à 170°C pendant 12 min et un spectromètre de viscoélasticité dans les conditions d'une fréquence de 10 Hz, d'une contrainte initiale de 10 %, d'une amplitude de 0,5 % et d'une vitesse d'élévation de la température de 2°C/min.

2. Composition de caoutchouc selon la revendication 1, **caractérisée en ce que** ledit caoutchouc de styrène-butadiène contient un caoutchouc de styrène-butadiène polymérisé en émulsion.

3. Composition de caoutchouc selon la revendication 1, **caractérisée en ce que** ledit caoutchouc de styrène-butadiène contient un caoutchouc de styrène-butadiène polymérisé en solution.

4. Composition de caoutchouc selon l'une quelconque des revendications 1 à 3, **caractérisée en ce que** ledit constituant de caoutchouc contient de 5 à 20 % en poids dudit copolymère halogéné d'isobutylène et de p-méthylstyrène.
